# EUROPÄISCHE PATENTSCHRIFT

(11) **EP 3 803 140 B1**
(45) Veröffentlichungstag und Bekanntmachung des Hinweises auf die Patenterteilung: **22.06.2022**
(21) Anmeldenummer: 19729671.8
(22) Anmeldetag: 03.06.2019
(51) Int. Cl.: F16B 31/02, G01B 7/16, F16B 13/00

(54) **BEFESTIGUNGSANORDNUNG UND MESSVERFAHREN**
FASTENING ARRANGEMENT AND MEASUREMENT METHOD
DISPOSITIF DE FIXATION ET PROCÉDÉ DE MESURE

(30) Priorität: 05.06.2018 DE 102018113303; 23.05.2019 DE 102019113850
(43) Veröffentlichungstag der Anmeldung: 14.04.2021
(73) Patentinhaber: fischerwerke GmbH & Co. KG, 72178 Waldachtal (DE)
(72) Erfinder: SCHÄTZLE, Joachim, 79341 Kenzingen (DE); SUCHY, Ulrich, 72250 Freudenstadt (DE); LEHMANN, David, 72275 Alpirsbach (DE); HORN, Sebastian, 72184 Eutingen i.G. (DE); RIEXINGER, Sven, 77767 Appenweier (DE)
(86) Internationale Anmeldenummer: PCT/EP2019/064254
(87) Internationale Veröffentlichungsnummer: WO 2019/233907

(56) Entgegenhaltungen:
- EP-A1- 3 290 721
- CN-U- 204 755 515
- DE-A1- 4 243 878
- US-A1- 2011 241 704
- US-A1- 2012 274 334

## Beschreibung

Die Erfindung betrifft eine Befestigungsanordnung mit den Merkmalen des Oberbegriffs des Anspruchs 1 sowie ein Messverfahren mit den Merkmalen des Anspruchs 12.

Aus der Europäischen Patentanmeldung EP 3 290 721 A1 ist eine für das Bauwesen typische Befestigungsanordnung mit einem Anker bekannt, mit dem ein Bauteil an einem Befestigungsgrund aus Beton befestigt ist. Die Befestigungsanordnung dient zu Messung einer Verschiebung des Bauteils unter Last und somit zur Kontrolle der Befestigungsanordnung. Der Anker, mit dem das Bauteil am Befestigungsgrund befestigt ist, ist ein sogenannter Bolzenanker, wie er im Bauwesen beispielsweise zur Befestigung von Ankerplatten von Stahlträgern oder Geländern eingesetzt wird. Der Bolzenanker ist in einem Bohrloch im Befestigungsgrund angeordnet und durch Aufspreizen einer Spreizhülse im Befestigungsgrund verankert. Um zu ermitteln, ob und wie sehr sich das Bauteil beziehungsweise ein Schaft des Bolzenankers unter Wirkung einer Last verschiebt, ist an einem vorderen Ende des Schafts des Bolzenankers ein Sensor angeordnet, der den Abstand des vorderen Endes des Schafts vom Bohrlochgrund misst. Wird der Schaft unter Last in Auszugsrichtung aus dem Bohrloch heraus bewegt, so misst der Sensor den zurückgelegten Weg. Nachteilig an der bekannten Befestigungsanordnung ist, dass der Sensor relativ klein und filigran ausgebildet werden muss, um eine Integration in den Bolzenanker zu ermöglichen, was die Gefahr einer Beschädigung und eines Ausfalls des Sensors erhöht.

Aufgabe der Erfindung ist, eine alternative Befestigungsanordnung für das Bauwesen bereitzustellen, mit der eine Bewegung des Bauteils unter Last gemessen und der Zustand der Befestigungsanordnung kontrolliert werden kann. Die Befestigungsanordnung soll robust ausgebildet sein, sodass die Gefahr einer Beschädigung des Sensors bei der Verwendung reduziert ist.

Diese Aufgabe wird erfindungsgemäß durch eine Befestigungsanordnung mit den Merkmalen des Anspruchs 1 gelöst, die in einem Messverfahren nach Anspruch 12 verwendet werden kann. Die erfindungsgemäße Befestigungsanordnung für den Einsatz im Bauwesen weist ein an einem Befestigungsgrund angeordnetes Bauteil, ein Befestigungsmittel und einen Sensor auf. Der Befestigungsgrund ist Teil eines Bauwerks, beispielsweise ein Balken, ein Träger, eine Decke oder eine Wand. Der Befestigungsgrund kann beispielsweise aus Stahl, Holz, Beton oder Mauerwerk sein, wobei das Material des Befestigungsgrundes insbesondere Beton ist. Das Bauteil kann beispielsweise ein Holzbalken, eine Anker- oder Kopfplatte einer Metallkonstruktion, eine Maschine in einer Werkhalle, ein an einem im Befestigungsgrund verankerten Haken aufgehängter Kran oder ähnliches sein. Das Bauteil ist mit dem Befestigungsmittel am Befestigungsgrund befestigt, sodass Kräfte vom Bauteil über das Befestigungsmittel auf den Befestigungsgrund übertragen werden können. Hierbei durchdringt das Befestigungsmittel das Bauteil und presst das Bauteil gegen den Befestigungsgrund. Ein Befestigungsmittel ist im Sinne der Erfindung jedes im Bauwesen typische oder einsetzbare Mittel, mit dem das Bauteil an dem Befestigungsgrund befestigt werden kann. Typische Befestigungsmittel des Bauwesens sind Anker, Schrauben und Dübel, wobei auch der Kleber einer Klebeverbindung oder ein zwischen dem Bauteil und dem Befestigungsgrund angeordnetes Vakuumpad oder ein Saugnapf ein Befestigungsmittel im Sinne der Erfindung darstellt. Insbesondere ist das Befestigungsmittel ein in einem Bohrloch im Befestigungsgrund befestigter Anker, beispielsweise ein Kunststoffdübel, ein Spreizanker, insbesondere ein sogenannter Bolzen- oder Hülsenanker, oder ein Verbundanker, beispielsweise eine Ankerstange, die mittels einer aushärtbaren Masse im Bohrloch befestigt ist. Insbesondere ist das Befestigungsmittel ein Spreiz- oder Verbundanker, der in einem Befestigungsgrund aus Beton befestigt ist.

Der Sensor der Befestigungsanordnung dient zur Messung einer Bewegung des Bauteils vom Befestigungsgrund weg. Der Sensor misst also den Weg, den sich das Bauteil vom Befestigungsgrund weg bewegt, wenn auf das Bauteil und/oder das Befestigungsmittel eine Kraft wirkt. Dies schließt nicht aus, dass auch eine Bewegung zum Befestigungsgrund hin, beispielsweise nach einer vorherigen Bewegung vom Befestigungsgrund weg, gemessen werden kann. Die Kraft ist insbesondere eine auf das Bauteil und/oder den Anker wirkende Zugkraft, deren Kraftvektor vom Befestigungsgrund weg gerichtet ist. Die Kraft kann beispielsweise eine äußere Kraft sein, beispielsweise hervorgerufen durch Benutzung oder durch Wind, oder eine innere Kraft, wie beispielsweise das Eigengewicht des Bauteils, das beispielsweise als Biegemoment in eine Ankerplatte eines Stahlträgers eingeleitet und dort als Kräftepaar in den Befestigungsgrund abgeleitet wird, wobei das Befestigungsmittel zumindest die vom Befestigungsgrund weg gerichtete Zugkraft überträgt. Die Messung der Bewegung des Bauteils relativ zum Befestigungsgrund erfolgt mit dem Sensor erfindungsgemäß kapazitiv, also mithilfe eines Kondensators. Der Grundgedanke basiert darauf, dass sich zumindest eine der messbaren Kenngrößen eines geladenen Kondensators, der eine erste und eine zweite Elektrode umfasst, ändert, wenn sich der Abstand zwischen der ersten Elektrode des Kondensators und der zweiten Elektrode des Kondensators ändert, insbesondere dann, wenn sich die zweite Elektrode von der ersten Elektrode weg bewegt.

Kennzeichnend für die Erfindung ist, dass die erste Elektrode des Kondensators zwischen dem Bauteil und dem Befestigungsgrund angeordnet ist. Insbesondere liegt die erste Elektrode zwischen dem Bauteil und dem Befestigungsgrund, so dass sowohl das Bauteil, wie auch der Befestigungsgrund die als Kondensatorplatte wirkende Fläche der Elektrode flächig überdecken. Die erste Elektrode des Sensors, der neben der ersten Elektrode weitere Sensorelemente, Stecker, Kabel und/oder weitere Elemente umfassen kann, kann somit unabhängig von einem Bohrloch und/oder dem Befestigungsmittel in der Befestigungsanordnung angeordnet werden. Ein derartiger Sensor kann robust ausgebildet sein, sodass er auch im Außenbereich bei großen wirkenden Kräften und bei den im Baubereich durchaus üblichen relativ großen Toleranzen eingesetzt werden kann. Die erste Elektrode ist insbesondere flächig aus einem Metallblech, einer Metallfolie oder einem Metallgeflecht hergestellt. Dabei ist die erste Elektrode insbesondere so dünn ausgebildet, dass sie als im Wesentlichen biegeschlaft bezeichnet werden kann, was bedeutet, dass die Elektrode bereits bei geringer Krafteinwirkung um eine Achse gebogen werden kann, die in der oder parallel zur Elektrodenfläche verläuft. Die Dicke der Elektrode beträgt insbesondere maximal 0,5 Millimeter, insbesondere maximal 0,15 Millimeter. Eine handelsübliche und im Haushalt gebräuchliche Alu-Folie mit einer Dicke von circa 0,004 Millimeter bis 0,02 Millimeter ist ein Beispiel für eine biegeschlaffe Metallfolie. Die erste Elektrode kann aus mehreren Teilen bestehen, die gemeinsam in einer Fläche liegen und die erste Elektrode des Sensors bilden.

Vorzugsweise ist die erste Elektrode im Wesentlichen unbeweglich mit dem Befestigungsgrund verbunden. "Im Wesentlichen unbeweglich" meint hier, dass die erste Elektrode oder ein die erste Elektrode enthaltender Teil des Sensors derart mit dem Befestigungsgrund verbunden ist, dass sich die erste Elektrode nicht durch eine Bewegung des Bauteils zusammen mit diesem vom Befestigungsgrund weg bewegen und sich insbesondere durch diese Bewegung nicht vom Befestigungsgrund lösen kann. Insbesondere ist die erste Elektrode direkt oder indirekt mit dem Befestigungsgrund verklebt, was die Montage der ersten Elektrode und des Sensors vereinfacht. Hierfür weist die erste Elektrode oder der die erste Elektrode enthaltende Teil des Sensors auf seiner dem Befestigungsgrund zugewandten Seite insbesondere eine Klebefläche auf, beispielsweise ein Klebeband. Die Befestigung kann alternativ auch mit einem Anker, einer Schraube und/oder einem Dübel am Befestigungsgrund, allgemein stoff-, form-, feld- oder kraftschlüssig erfolgen. Dass die erste Elektrode "im Wesentlichen unbeweglich" mit dem Befestigungsgrund verbunden ist, schließt aber nicht aus, dass sich die erste Elektrode im Sensor relativ zum Befestigungsgrund bewegen kann, sofern diese Bewegung um ein Vielfaches kleiner als die zu messende Bewegung des Bauteils zum Befestigungsgrund ist. Beispielsweise dann, wenn die erste Elektrode in eine elastische Umhüllung des Sensors eingebettet ist, die sie vor Schlägen oder anderen äußeren Einwirkungen bei der Montage und während der Verwendung schützt, kann die erste Elektrode innerhalb des Sensors durch ein elastisches Zusammenpressen bei der Montage oder durch eine Entlastung des Sensors relativ zum Verankerungsgrund bewegt werden, obwohl sie indirekt über die Umhüllung mit dem Befestigungsgrund verklebt und somit "im Wesentlichen" unbeweglich mit diesem ist. Bei dieser geringfügigen Bewegung der Elektrode entfernt sich aber die Seite des Sensors, die dem Befestigungsgrund zugewandt ist, im Wesentlichen nicht vom Befestigungsgrund.

In einer bevorzugten Ausgestaltungsform der erfindungsgemäßen Befestigungsanordnung ist die zweite Elektrode des Kondensators im Wesentlichen unbeweglich mit dem Bauteil verbunden, insbesondere durch eine Verklebung. Alternativ oder ergänzend kann das Bauteil die zweite Elektrode oder Teile der zweiten Elektrode bilden, insbesondere dann, wenn das Bauteil teilweise oder insgesamt aus Metall ist. Durch die Verwendung des Bauteils als zweite Elektrode besteht die Befestigungsanordnung aus wenigen Teilen und ist einfach und kostengünstig im Aufbau. Die Verwendung einer gesonderten, mit dem Bauteil im Wesentlichen unbeweglich verbundenen zweiten Elektrode hat den Vorteil, dass die Fläche der zweiten Elektrode eindeutig bestimmt werden, beziehungsweise die zweite Elektrode mit einer bestimmten Fläche hergestellt werden, kann. Insbesondere ist die Fläche der zweiten Elektrode gleich der Fläche der ersten Elektrode. Insbesondere ist die zweite Elektrode baugleich mit der ersten Elektrode. Durch die Verwendung einer mit dem Bauteil im Wesentlichen unbeweglich verbundenen zweiten Elektrode kann auch dann ein wirksamer Kondensator ausgebildet werden, wenn das Bauteil beispielsweise aus Holz, Kunststoff oder einem anderen elektrisch wenig oder nichtleitenden Material besteht. Insbesondere ist bei der Verwendung einer gesonderten zweiten Elektrode, die am Bauteil angeordnet ist, die zweite Elektrode vom Bauteil elektrisch isoliert und/oder abgeschirmt, damit das Bauteil eine Messung eines Messwerts des Kondensators, beispielsweise der Spannung des Kondensators bei gleichbleibender Stromstärke, nicht beeinflusst.

Unabhängig davon, ob die zweite Elektrode durch das Bauteil gebildet wird oder an diesem als gesondertes Teil angeordnet ist, ist die zweite Elektrode insbesondere nicht an eine elektrische Stromquelle angeschlossen, was den Aufbau der Befestigungsanordnung stark vereinfacht. Dies schließt aber nicht aus, dass die zweite Elektrode geerdet ist. Die Erdung kann unabhängig von einer Erdung der Stromquelle erfolgen.

Die Messung der Bewegung kann qualitativ oder quantitativ erfolgen. "Qualitativ" bedeutet, dass durch den Anwender bei einer Messung nur gemessen werden kann, ob sich eine Messgröße des Kondensators, beispielsweise die Spannung, ändert, oder ob sie im Rahmen der Messgenauigkeit konstant bleibt. Ändert sich die Spannung, so bedeutet dies, dass sich das Bauteil relativ zum Befestigungsgrund verschoben hat, wobei der Verschiebeweg nicht bestimmt wird oder bestimmt werden kann. "Quantitativ" bedeutet, dass durch die Änderung der Messgröße eine Angabe der Größe des Verschiebewegs möglich ist. Dies kann beispielsweise durch eine Kalibrierung des Kondensators vor Ort, also in Einbaulage erfolgen, beispielsweise indem das Bauteil in einen bestimmten Abstand vom Befestigungsgrund bewegt und dabei ein Messwert des Kondensators, beispielsweise die Spannung bei gleichbleibender Stromstärke, gemessen wird. Ist die wirkende Fläche der beiden Elektroden bekannt, so kann auch ohne eine vorherige Kalibrierung vor Ort direkt aus der Messung der sich ändernden Messgröße der Verschiebeweg berechnet werden.

Vorzugsweise ist die erste Elektrode von der zweiten Elektrode durch eine feste, elektrisch isolierende Trennschicht getrennt. Diese Trennschicht wirkt als Dielektrikum zwischen den beiden Elektroden des Kondensators, zwischen denen sie angeordnet ist. Die Trennschicht kann insbesondere aus mehreren Schichten bestehen. "Fest" meint hier, dass das Material der Trennschicht nicht gasförmig oder flüssig ist. Die Trennschicht ist insbesondere eine Folie aus Kunststoff, beispielsweise auf Polyethylen. Auch ein elastisches und weiches Material, insbesondere ein gummiartiger Werkstoff, der die Elektroden zusätzlich vor Stößen und ähnlichen Einflüssen schützt, die die Elektroden möglicherweise beschädigen könnten, ist als Trennschicht geeignet.

Unter einem "elastischen und weichen Material" wird hier und im Folgenden ein Werkstoff verstanden, der elastisch verformbar, elektrisch isolierend und wasserdicht ist. Insbesondere ist dieses Material "gummiartig", also unter Zug- und Druck leicht elastisch verformbar, insbesondere biegeschlaff, aber unempfindlich gegenüber dem Eindringen spitzer Gegenstände, wie sie beispielsweise bei einem Befestigungsgrund aus Beton oder bei einem Bauteil aus feuerverzinktem Stahl in deren Oberfläche vorhanden sein können und von einem Verwender als "Oberflächenrauheit" wahrgenommen werden. Der gummiartige Werkstoff ist insbesondere ein weicher Kunststoff, insbesondere ein Elastomer oder ein Silikon.

Weiterhin ist bevorzugt, dass zwischen dem Bauteil und der ersten Elektrode eine Schutzschicht angeordnet ist. Diese Schutzschicht ist insbesondere weich und elastisch, insbesondere biegeschlaff, so dass sie sich der Oberfläche des Bauteils durch Verformen gut anpassen kann. Alternativ kann die Schutzschicht aber auch hart und formstabil, insbesondere biegesteif ausgeführt sein, so dass sie als eine Art "Panzerung" zum Schutz der Elektrode wirkt. Diese Schutzschicht kann insbesondere auch aus einem elastischen und weichen Material bestehen. Sie kann insbesondere auch elektrisch isolierend wirken, sodass für die Schutzschicht das gleiche Material verwendet werden kann, wie für die Trennschicht zwischen den beiden Elektroden. Insbesondere dann, wenn das Bauteil nicht die zweite Elektrode des Kondensators bildet, sondern ein vom Bauteil gesondertes Element als zweite Elektrode verwendet wird, kann auch zwischen dem Bauteil und der zweiten Elektrode eine weiche elastische Schutzschicht angeordnet sein. Zudem kann auch zwischen der ersten Elektrode und der zweiten Elektrode eine weiche Schutzschicht angeordnet sein, die insbesondere nicht zusätzlich zur Trennschicht angeordnet ist, sondern sowohl die Schutzschicht als auch die Trennschicht bildet. Insbesondere dann, wenn die zweite Elektrode nicht einstückig in einem Teil des Sensors angeordnet ist, sondern der Sensor zumindest zweistückig ausgebildet ist, wobei jedes Teil eine der Elektroden enthält, kann jede der Elektroden eine Schutzschicht aufweisen, die gemeinsam als Schutz- und Trennschicht zwischen den Elektroden wirken können. Zudem kann zwischen der ersten Elektrode und dem Bestfestigungsgrund und/oder der zweiten Elektrode und dem Bauteil eine Schutzschicht angeordnet sein. Jeweils eine Schutzschicht liegt insbesondere flächig und abdichtend am Befestigungsgrund und/oder am Bauteil an, derart, dass kein Luftspalt zwischen dem Bauteil und der ersten Elektrode vorhanden ist, zumindest derart, dass kein Austausch mit der Außenluft und/oder ein Eindringen von Feuchtigkeit oder allgemein von Flüssigkeit möglich ist. Denn das Eindringen von Flüssigkeit würde zu einer Änderung des Messwerts des Kondensators, beispielsweise der Spannung führen, auch ohne dass sich das Bauteil vom Befestigungsgrund weg bewegt, was zu einer falschen Interpretation des Messwerts führen könnte und daher unerwünscht ist. Insbesondere bei der Verwendung von Spreizankern, Ankerstangen, Dübeln oder Schrauben, mit denen das Bauteil gegen den Befestigungsgrund verspannt werden kann, wirkt die Schutzschicht als Dichtung. Wird dagegen das Bauteil mit dem Befestigungsgrund verklebt, kann der verwendete Kleber die Funktion der Dichtung übernehmen oder die Abdichtung unterstützen.

Die Dicke der Schutzschicht und/oder der Trennschicht beträgt insbesondere nur wenige Millimeter, sie ist insbesondere kleiner als zwei Millimeter, insbesondere kleiner als 1 Millimeter, so dass die Bauhöhe des Sensors beziehungsweise der die Elektroden enthaltenen Teile des Sensors so gering ist, dass sie die Montage des Bauteils am Befestigungsgrund nicht stört und keine zusätzlichen Vertiefungen oder Aussparungen am Befestigungsgrund und/oder am Bauteil vorgesehen oder erstellt werden müssen, um die Elektrode(n) aufnehmen zu können. Durch die geringe Bauhöhe kann zumindest die erste Elektrode zwischen dem Bauteil und dem Befestigungsgrund angeordnet werden, ohne dass sie bei der Montage stört oder durch eine zu starke Stauchung beschädigt wird.

Durch die Verwendung einer im Wesentlichen biegeschlaffen Elektrode in Verbindung mit dem elastischen und weichen Material ist die Elektrode, insbesondere der gesamte Sensor, leicht verformbar und die Elektrode beziehungsweise der Sensor kann sich gut an die Form und die Oberfläche des Befestigungsgrund und/oder des Bauteils anpassen, so dass die Gefahr einer Beschädigung bei der Montage und Verwendung gering ist.

Vorzugsweise können die weichen, elastischen Schutzschichten der Elektroden gemeinsam eine Umhüllung der jeweiligen Elektrode oder gemeinsam eine Umhüllung beider Elektroden bilden. Insbesondere können in die Umhüllung weitere Bauelemente des Sensors integriert sein. "Umhüllung" meint hier, dass die Schutzschicht die erste Elektrode flächig und insbesondere vollständig außen umhüllt, sodass die Schutzschicht die erste Elektrode und gegebenenfalls weitere Bauelemente des Sensors gegen Beschädigungen schützt. Eine derartige Umhüllung kann auch für die zweite Elektrode vorgesehen sein. Insbesondere kann die Umhüllung beide Elektroden einstückig verbinden. Eine vollständige äußere Umhüllung schließt aber nicht aus, dass Durchführungen für Kabel oder Stecker durch die Umhüllung vorhanden sind. Umhüllt die Umhüllung die erste und die zweite Elektrode gemeinsam einstückig, so kann insbesondere ein Gummi oder ein weicher, elastischer Kunststoff, beispielsweise ein Silikon, derart um die erste und die zweite Elektrode gespritzt beziehungsweise gegossen sein, dass die beiden Elektroden flächig parallel zueinander ausgerichtet, durch eine Trennschicht aus Silikon elektrisch getrennt und durch Schutzschichten aus Silikon nach außen umhüllt sind, wobei die Schutzschichten und die Trennschicht einstückig sind. Alternativ kann die Trennschicht aus zwei Teilen bestehen, die jeweils eine Schutzschicht der jeweiligen Elektrode bilden und Bestandteile einer Umhüllung der jeweiligen Elektrode sind.

Weiterhin ist bevorzugt, dass an der dem Bauteil abgewandten Seite der ersten Elektrode eine elektrische Abschirmung angeordnet ist, die von der ersten Elektrode durch eine elektrische Isolationsschicht getrennt ist. Die Abschirmung besteht aus einem leitenden Material, beispielsweise ebenfalls aus einer Metallfolie, einem Leitlack oder einem Drahtgeflecht. Die elektrische Isolationsschicht trennt die Abschirmung von der Elektrode, sodass sie elektrisch getrennt sind. Die Isolationsschicht kann insbesondere aus dem gleichen Material wie die Trennschicht und/oder die Schutzschicht und/oder die Umhüllung bestehen. Insbesondere sind die Isolationsschicht, die Trennschicht und die Schutzschicht beziehungsweise die Umhüllung einstückig aus dem gleichen Material hergestellt.

Vorzugsweise sind die zweite Elektrode und die Abschirmung gemeinsam über ein Potenzialausgleichsmittel verbunden, insbesondere sind sie geerdet. Ein Potenzialausgleichsmittel gleicht das elektrische Potenzial der zweiten Elektrode und der Abschirmung aus, sodass diese das gleiche elektrische Potenzial aufweisen. Das Potenzialausgleichsmittel ist beispielsweise ein Draht oder Kabel, das die zweite Elektrode und die Abschirmung miteinander elektrisch verbindet. Das Potenzialausgleichsmittel kann auch aus mehreren Kabeln bestehen, die die zweite Elektrode in die Abschirmung "erden", d. h. indirekt über die Erde, den Befestigungsgrund und/oder das Bauteil miteinander verbinden, wie dies im Bauwesen für Elektroinstallationen üblich ist. Statt eines Kabels kann noch ein Metallstift oder ein ähnliches leitendes Element verwendet werden.

Weiterhin ist bevorzugt, dass der Sensor ein Anschlusselement zum elektrischen Anschluss der ersten Elektrode an eine Stromquelle aufweist. Das Anschlusselement kann beispielsweise ein Stecker, ein Leiter, wie beispielsweise ein Kabel oder eine elektrisch leitend bedruckte Folie, oder auch ein Empfänger für eine kontaktlose Versorgung des Sensors sein. Insbesondere weist der Sensor genau ein Anschlusselement auf, mit der der Sensor mit Gleichstrom zum Laden zumindest einer Elektrode des Kondensators, insbesondere der ersten Elektrode des Kondensators, versorgt werden kann. Insbesondere ist nur eine der Elektroden, insbesondere die erste Elektrode, über das Anschlusselement mit einer Stromquelle verbunden, was den Aufbau und die Anwendung des Sensors vereinfacht.

Insbesondere ist die erste Elektrode und/oder der Sensor ringförmig beziehungsweise mit einer Durchführöffnung für ein lang gestrecktes Befestigungsmittel, beispielsweise eine Ankerstange, ein Anker, ein Dübel oder eine Schraube, ausgebildet. Durch die Durchführöffnung hindurch kann das Befestigungsmittel in den Befestigungsgrund eingebracht werden, beispielsweise eine Schraube in Holz direkt eingeschraubt oder ein Bolzenanker in ein Bohrloch in einem Befestigungsgrund aus Beton eingesteckt werden. Hierdurch ist gewährleistet, dass das Befestigungsmittel zumindest die erste Elektrode des Sensors gegen ein seitliches Verrutschen quer zur Achse der Durchführöffnung sichert. Zudem kann die Verschiebung des Bauteils direkt im Bereich des Befestigungsmittels gemessen werden, womit direkte Rückschlüsse auf die Bewegung des Befestigungsmittels unter Last möglich sind.

Bei einer weiteren bevorzugten Ausgestaltungsform der erfindungsgemäßen Befestigungsanordnung ist die erste Elektrode U-förmig oder als geschlitzter Ring ausgebildet. D. h., in der Ebene der Elektrode befindet sich eine Einführöffnung für ein Befestigungselement, wie zum Beispiel eine Ankerstange, ein Dübel oder eine Schraube. Ist die erste Elektrode beispielsweise eine dünne Metallplatte, so ist diese Metallplatte in der Draufsicht beispielsweise U-förmig, wobei die Öffnung des "U"s die Einführöffnung bildet. Die erste Elektrode kann somit auf eine Ankerstange seitlich, radial zur Längsachse der Ankerstange aufgeschoben werden. Somit ist auch dann eine Montage des Sensors möglich, wenn das Bauteil bereits mit dem Befestigungsmittel verbunden ist. Beispielsweise kann bei einem bereits montierten und mit einer Ankerstangen befestigten Bauteil eine Mutter, mit der das Bauteil an der Ankerstangen festgelegt ist, gelöst, das Bauteil etwas vom Befestigungsgrund entfernt und die erste Elektrode beziehungsweise der Sensor zwischen Bauteil und Befestigungsgrund eingeschoben werden. Somit ist auch eine nachträgliche Montage des Sensors beziehungsweise eine Nachrüstung einer bestehenden nicht erfindungsgemäßen Befestigungsanordnung ohne Sensor auf einfache Weise mit einem Sensor möglich.

Vorzugsweise umfasst die Befestigungsanordnung mehrere erste Elektroden, die in einer Ebene zwischen dem Bauteil und dem Befestigungselement verteilt angeordnet sind. Insbesondere werden hierzu mehrere baugleiche Teile verwendet, die jeweils eine erste Elektrode aufweisen. Jede der ersten Elektroden misst den Abstand zwischen sich und dem Bauteil, sodass eine flächige Aufnahme der Abstände zwischen dem Bauteil und dem Befestigungsgrund möglich ist. Somit kann beispielsweise die lokale Verformung einer Ankerplatte, die am Befestigungsgrund befestigt ist, durch die Messung der Bewegung an verschiedenen Punkten der Ankerplatte ermittelt werden. Dies ist insbesondere dann von Vorteil, wenn die Verformung der Ankerplatte für das potentielle Versagen einer Konstruktion maßgeblich werden kann.

In einem erfindungsgemäßen Messverfahren wird eine erfindungsgemäße Befestigungsanordnung verwendet und mittels des Sensors ein mit dem Abstand des Bauteils von der ersten Elektrode korreliertes Signal erzeugt. Diese Korrelation kann, wie oben beschrieben qualitativ oder quantitativ sein. Das Signal ist insbesondere ein elektrischer Messwert, insbesondere die Spannung der ersten Elektrode, deren Änderung bei einer Bewegung gemessen wird. Vorzugsweise wird bei einer Anfangsbelastung des Bauteils ein Referenzsignal erzeugt. Insbesondere kann dieses Referenzsignal als "Null"-Abstand des Bauteils vom Befestigungsgrund beziehungsweise als "Sollwert" festgelegt werden. Vorzugsweise wird bei nachfolgenden Messungen das mit dem Abstand des Bauteils von der ersten Elektrode korrelierte Signal mit dem Referenzsignal verglichen und der Verschiebeweg ermittelt. Dabei kann der Verschiebeweg qualitativ ermittelt werden, in der Regel binär, mit den beiden Möglichkeiten "es liegt eine Verschiebung vor" oder "es liegt keine Verschiebung vor". Alternativ kann durch eine qualitative Messung die Größe der Verschiebung als genauer Wert, beispielsweise in Millimetern, ermittelt beziehungsweise berechnet werden.

Vorzugsweise wird in einem weiteren Schritt der ermittelte Verschiebeweg mit Vergleichswerten verglichen. Im einfachsten Fall kann der Vergleichswert das Referenzsignal der Anfangsbelastung sein, sodass nur festgestellt wird, ob eine Verschiebung vorhanden ist oder nicht. Alternativ kann der Vergleichswert mit Kraft-Weg-Diagrammen des verwendeten Befestigungsmittels korreliert sein. Derartige Kraft-Weg-Diagramme sind beispielsweise von bauaufsichtlich zugelassenen Befestigungsmitteln, wie beispielsweise Spreizankern oder mit einer aushärtenden Masse eingeklebten Gewindestangen, den Herstellern aus Versuchen bekannt, die zur Erlangung einer bauaufsichtlichen Zulassung notwendig sind. Alternativ können derartige Vergleichswerte durch Vergleichsversuche ermittelt werden. Aus einem Vergleich der gemessenen Verschiebung des Bauteils relativ zum Befestigungsgrund mit dem Vergleichswert kann somit beispielsweise ermittelt werden, wie stark das Tragpotential des Befestigungsmittels ausgenutzt ist und/oder ob die vorhandene Verschiebung sicherheitskritisch ist oder nicht.

Ein wesentlicher Vorteil der erfindungsgemäßen Befestigungsanordnung und des erfindungsgemäßen Messverfahrens gegenüber dem Stand der Technik ist neben dem bereits erwähnten möglichen Einsatz für die Überwachung von bauaufsichtlich zulassungspflichtigen Befestigungsmitteln, dass der Sensor nicht mehr im Bohrloch angeordnet ist, was den Aufbau der Befestigungsanordnung wesentlich vereinfacht. Grundlegend für die Erfindung ist die Erkenntnis, dass zur Beurteilung der Leistungsfähigkeit des Befestigungselements die Verschiebung des Befestigungselements nicht direkt am Befestigungselement, insbesondere nicht direkt im Spreiz- oder Verankerungsbereich eines Spreiz- oder Verbundankers gemessen werden muss, sondern dass es ausreicht, den Sensor außerhalb des Bohrlochs zwischen dem Befestigungsgrund und dem Anbauteil anzuordnen und die gemessene Verschiebung des Anbauteils durch Korrelation mit gemessenen Kenngrößen auf den Zustand des Befestigungselements zu schließen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von Ausführungsbeispielen näher beschrieben.

Es zeigen:
- Figur 1: eine erste erfindungsgemäße Befestigungsanordnung in einer Schnittdarstellung;
- Figur 2: eine zweite erfindungsgemäße Befestigungsanordnung in einer Schnittdarstellung;
- Figur 3: eine dritte erfindungsgemäße Befestigungsanordnung in einer Schnittdarstellung; und
- Figur 4: verschiedene Elektroden für erfindungsgemäße Befestigungsanordnungen in ein einer Draufsicht.

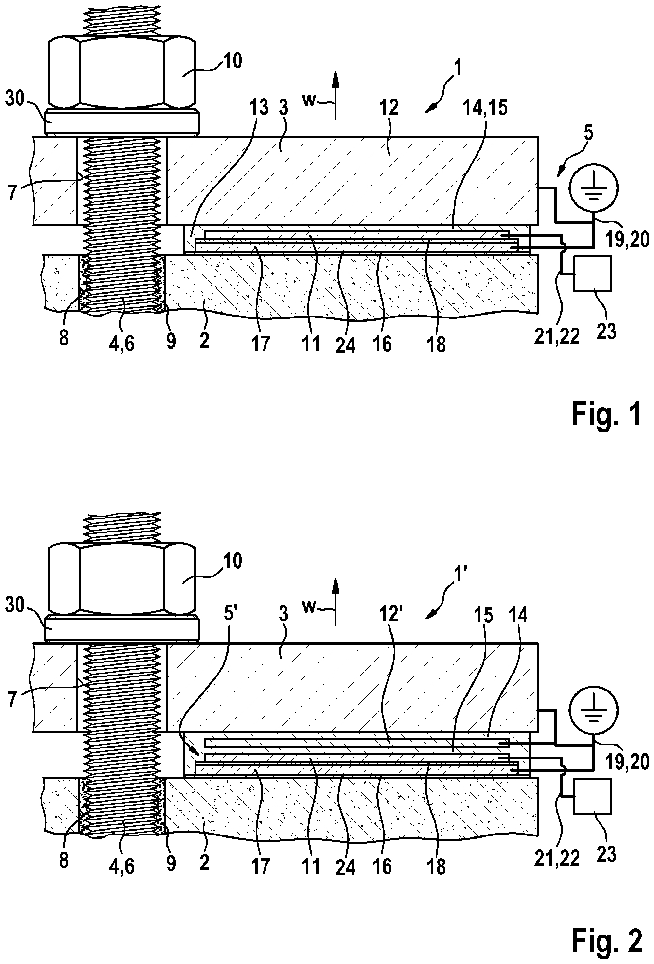

In den Figuren 1 bis 3 sind erfindungsgemäße Befestigungsanordnungen 1, 1', 1" für das Bauwesen dargestellt. Die Befestigungsanordnungen 1, 1', 1" weisen jeweils einen Befestigungsgrund 2 aus Beton, eine Ankerplatte aus Stahl als Bauteil 3, ein Befestigungsmittel 4 sowie einen Sensor 5 auf. Das Befestigungselement 4 ist in allen drei Befestigungsanordnungen 1, 1', 1" eine Gewindestange 6, die durch ein Durchgangsloch 7 des Bauteils 3 hindurch in ein Bohrloch 8 im Befestigungsgrund 2 reicht und dort mit einer aushärtenden Masse 9 eingeklebt und verankert ist. Das Bauteil 3 ist mit einer auf die Gewindestange 6 aufgeschraubten Mutter 10 und einer Unterlegscheibe 30 gegen den Befestigungsgrund 2 verspannt. Zwischen dem Bauteil 3 und dem Befestigungsgrund 2 ist eine erste Elektrode 11 des Sensors 5, 5', 5" angeordnet. Die erste Elektrode 11 ist ein flaches, 0,1 Millimeter dickes quadratisches Stahlblech, das eine Fläche von 5 mal 5 Zentimetern, also von 25 Quadratzentimetern, aufweist. Die erste Elektrode 11 bildet mit einer zweiten Elektrode 12, 12', 12" einen Kondensator des Sensors 5, 5', 5", mit dem eine Bewegung des Bauteils 3 in eine Bewegungsrichtung w vom Bauteil 3 weg gemessen werden kann. Die Bewegung in die Bewegungsrichtung w wird beispielsweise durch eine Belastung hervorgerufen, die in Richtung der Bewegungsrichtung w am Bauteil 3 wirkt.

Wie in Figur 1 dargestellt ist die erste Elektrode 11 in eine Umhüllung 13 aus einem weichen, elastischen und wasserdichten Silikon eingebettet, die die erste Elektrode 11 vollständig umschließt. Die Umhüllung 13 aus Silikon wirkt zwischen dem Bauteil 3 und der ersten Elektrode 11 als weiche, elastische Schutzschicht 14 und gleichzeitig als elektrisch isolierende Trennschicht 15, da bei der in Figur 1 dargestellten Befestigungsanordnung 1 das Bauteil 3 die zweite Elektrode 12 des Kondensators bildet. Die Trennschicht 15 ist somit ein festes Dielektrikum des aus der ersten Elektrode 11 und der zweiten Elektrode 12 gebildeten Kondensators des Sensors 5. Zudem bildet die Umhüllung 13 eine zweite Schutzschicht 16 zwischen der ersten Elektrode 11 und dem Befestigungsgrund 2. Innerhalb der Umhüllung 13 und an der dem Bauteil 3 abgewandten Seite der ersten Elektrode 11 ist eine dünne Aluminiumfolie als elektrische Abschirmung 17 angeordnet, die von der ersten Elektrode 11 durch eine elektrische Isolationsschicht 18, hier eine dünne Folie aus Polyethylen, getrennt ist. Insgesamt weist der zwischen dem Bauteil 3 und dem Befestigungsgrund 2 angeordnete und durch die Umhüllung 13 umschlossene Teil des Sensors 5 eine Bauhöhe von einem Millimeter auf, und eine Fläche von 5,5 mal 5,5 Zentimetern. Der durch die Umhüllung 13 umschlossene Teil des Sensors 5 ist aufgrund seiner geringen Dicke biegeschlaff und bereits bei geringer Krafteinwirkung elastisch verformbar, sodass er sich gut an die Oberflächen des Bauteils 3 und des Befestigungsgrunds 2 anpasst und ein Verspannen des Bauteils 3 gegen den Befestigungsgrund 2 mit dem Befestigungsmittel 4 nicht stört.

Damit unterschiedliche elektrische Potenziale die Messung des Abstands zwischen der ersten Elektrode 11 und dem die zweite Elektrode bildenden Bauteil 3 nicht stören, ist die Abschirmung 17 über ein Erdungskabel 19 mit dem Bauteil 3 verbunden und geerdet. Das Erdungskabel 19, mit dem das Bauteil 3 und die Abschirmung 17 geerdet sind, dient als Potenzialausgleichsmittel 20, mit dem das elektrische Potenzial der Abschirmung 3 und des Bauteils 3 ausgeglichen wird.

Der Sensor 5 der Befestigungsanordnung 1 der Figur 1 weist zudem ein Anschlusskabel 21 als Anschlusselement 22 zum elektrischen Anschluss der ersten Elektrode 11 an einer Stromquelle 23 auf. Die Stromquelle 23 kann zudem eine Messeinrichtung umfassen, mit der ein Messwert gemessen wird, im Ausführungsbeispiel die Spannung des durch die erste Elektrode 11 und das Bauteil 3 als zweite Elektrode 12 gebildeten Kondensators.

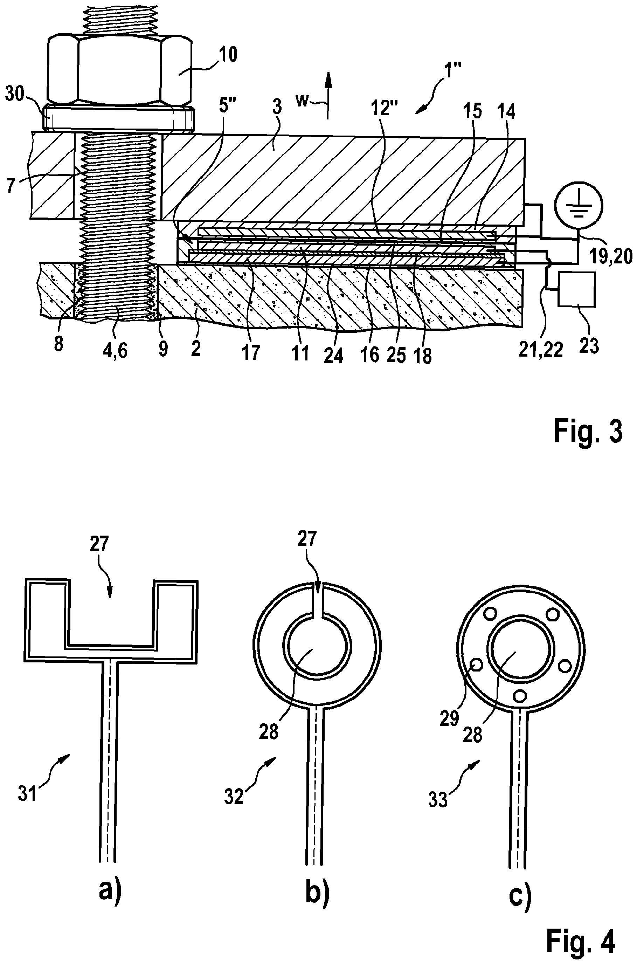

Die in den Figuren 2 und 3 dargestellten erfindungsgemäßen Befestigungsanordnungen 1', 1" unterscheiden sich von der in Figur 1 dargestellten erfindungsgemäßen Befestigungsanordnung 1 in Wesentlichen durch die Anordnung einer vom Bauteil 3 gesonderten zweiten Elektrode 12', 12", die vom Bauteil 3 zudem elektrisch getrennt und die ebenfalls, wie die erste Elektrode 11, in die Umhüllung 13 eingebettet ist.

Bei der in Figur 2 dargestellten zweiten erfindungsgemäßen Befestigungsanordnung 1' umschließt die Umhüllung 13 dem gesamten Sensor 5', bis auf Teile des Anschlusskabels 21 und des Erdungskabel 19. Der Sensor 5' ist hier einstückig ausgebildet. Die beiden Elektroden 11, 12', die Abschirmung 17 und die Isolationsschicht 18 bilden mit der Umhüllung 13 und der Trennschicht 15 eine Einheit. Die Trennschicht 15 ist aus dem gleichen Material hergestellt, wie die Schutzschichten 14, 16, die Teile der Umhüllung 13 bilden. Über das Erdungskabel 19 sind in diesem Fall die zweite Elektrode 12'und die Abschirmung 17 über das Bauteil 3 und das Befestigungsmittel 4 geerdet. Auch in diesem Fall ist nur eine Elektrode, wie im ersten Ausführungsbeispiels auch hier die erste Elektrode 11, über das Anschlusskabel 21 als Anschlusselement 22 mit der Stromquelle 23 verbunden.

Bei der in Figur 3 dargestellten Befestigungsanordnung 1" ist der Sensor 5" dagegen zweiteilig, wobei eine Trennfläche 25 die Trennschicht 15 mittig zwischen den Elektroden 11, 12" trennt. Ein erster Teil des Sensors 5", der am Bauteil 3 befestigt ist, umfasst die erste Elektrode 11 und der zweite Teil des Sensors 5", der am Befestigungsgrund 2 befestigt ist, die zweite Elektrode 12". Wie bei der zweiten Befestigungsanordnung 1' der Figur 2 ist auch bei dieser dritten Befestigungsanordnung 1" die Trennschicht 15 dicker als die erste Schutzschicht 14 und die zweite Schutzschicht 16.

Um zu verhindern, dass bei einer Bewegung des Bauteils 3 unter einer Last weg vom Befestigungsgrund 2 die erste Elektrode 11 mit dem Bauteil 3 mitbewegt wird, was bedeuten würde, dass sich der Abstand zwischen der ersten Elektrode 11 und der zweiten Elektrode 12 und somit auch der Messwert sich nicht ändert, ist die erste Elektrode 11 bei allen 3 Ausführungsbeispielen durch eine Kleberschicht 24 mit dem Befestigungsgrund 2 unbeweglich verbunden.

Bewegt sich das Bauteil 3 weg vom Befestigungsgrund 2, wird sich die elastische Umhüllung 13 und die Trennschicht 15 entspannen. Aufgrund der geringen Dicke der Umhüllung 13 wird bei der in Figur 1 dargestellten Befestigungsanordnung 1 die Änderung des Abstands durch die Entspannung der Umhüllung 13 und der Trennschicht 15 den Messwert nicht beeinflussen. Werden die Umhüllung 13 und/oder die Trennschicht 15 bewusst dicker ausgebildet, kann die Abstandsänderung aufgrund der Entspannung zur Messung verwendet werden. So wird bei der in Figur 2 dargestellten zweiten Befestigungsanordnung 1'die Entspannung dazu führen, dass die Trennschicht 15, die dicker ist, als die Schutzschichten 14, 16, die beiden Elektroden 11, 12' voneinander weg bewegt, wobei diese Bewegung der Bewegung des Bauteils 3 vom Befestigungsgrund 2 weg entspricht. Bei der dritten Befestigungsanordnung 1" der Figur 3 ist dagegen der Teil des Sensors 5, der die zweite Elektrode 12" enthält, über eine zweite Klebeschicht 26 im Wesentlichen unbeweglich mit dem Bauteil 3 verbunden, sodass die zweite Elektrode 12" mit dem Bauteil 3 in die Bewegungsrichtung w weg vom Befestigungsgrund 2 und somit weg von der ersten Elektrode 11 bewegt wird.

Bei allen drei Befestigungsanordnungen 1, 1', 1" wird zur Messung ein mit dem Abstand des Bauteils 3 von der ersten Elektrode 11 korreliertes Signal erzeugt, unabhängig davon, ob das Bauteil 3 oder ein gesondertes Teil die zweite Elektrode 12, 12', 12" des Kondensators des Sensors 5, 5', 5" bildet. Das bei einer Anfangsbelastung des Bauteils 3 erzeugte Signal wird als Referenzsignal verwendet, das mit dem im Weiteren gemessenen Signal, dem Messwert, verglichen wird. Bei den in den Figuren 1 bis 3 dargestellten Ausführungsbeispielen wird die erste Elektrode 11 mit einer bestimmten Ladung geladen und damit am Kondensator eine bestimmte Spannung als Referenzsignal erzeugt. Diese Spannung ist mit dem Abstand des Bauteils 3 von der ersten Elektrode 11 korreliert. Bewegt sich das Bauteil 3 in Bewegungsrichtung w vom Befestigungsgrund 2 weg, so vergrößert sich der Abstand zwischen der ersten Elektrode 11 und der zweiten Elektrode 12, 12', 12" in dem Maß, in dem sich das Bauteil 3 von dem Befestigungsgrund 2 entfernt. Eine Änderung des Abstands zwischen der ersten Elektrode 11 und der zweiten Elektrode 12, 12', 12" führt zu einer Änderung der Spannung des Kondensators, die als Signal gemessen und mit dem Referenzsignal verglichen werden kann. Ist die Größe der Elektroden 11, 12', 12" bekannt, wie dies bei den Befestigungsanordnungen 1', 1" der Figuren 2 und 3 der Fall ist, so kann der Weg, um den sich die zweite Elektrode 12', 12" von der ersten Elektrode 11 in Bewegungsrichtung w entfernt hat, quantitativ ermittelt werden. Dagegen ist bei der in Figur 1 dargestellten Befestigungsanordnung 1 ohne weitere Kalibrierung nur eine qualitative Aussage möglich, da die Größe der Fläche der zweiten Elektrode 12 nicht genau bestimmt werden kann. Somit kann nur gemessen werden, ob eine Änderung des Abstands vorliegt oder nicht.

Sofern der tatsächlich zurückgelegte Weg des Bauteils 3 relativ zum Befestigungsgrund 2 ermittelt werden kann, ist es auch möglich, über Vergleichswerte zu bestimmen, zu welchem Grad die maximal zulässige Last (Tragpotential) ausgenutzt wird, beziehungsweise auf den Zustand des Befestigungsmittels 4 zu schließen. Durch den Vergleich des zurückgelegten Wegs des Bauteils 3, der der Längenänderung der Gewindestange 6 beziehungsweise der Bewegung der Mutter 10 zum Befestigungsgrund 2 entspricht, mit bekannten Last-Verschiebung-Diagrammen des Befestigungsmittels 4, die aus Zulassungsversuchen oder allgemein aus Belastungstest des Befestigungsmittel 4 bekannt sind, kann geschlossen werden, wie groß die im Befestigungsmittel 4 wirkende Kraft ist, ob eine Überlastung und/oder ob eine unzulässige Verschiebung der Mutter 10 beziehungsweise eine zu große Dehnung der Gewindestange 6 vorliegt.

In Figur 4 sind weitere mögliche Ausgestaltungen der Elektroden 11, 12', 12" des Sensors 5 dargestellt. Figur 4a zeigt eine U-förmige Elektrode 31, die eine seitliche Einführöffnung 27 für das Befestigungsmittel 4 aufweist. Dagegen weist die Elektrode 32 der Figur 4b einen radialen Schlitz als Einführöffnung 27 auf, durch die das Befestigungsmittel in die Durchführöffnung 28 eingebracht werden kann. Da die Elektrode 32, wie oben beschrieben, biegeschlaff und leicht verformbar ausgebildet werden können, kann die Einführöffnung 27 der Elektrode 32 zum Einführen des Befestigungsmittels 4 in Umfangsrichtung geweitet und nach dem Einführen wieder geschlossen werden. Dagegen weist die Elektrode 33 der Figur 4c nur eine Durchführungsöffnung 28 zum axialen Durchführen eines Befestigungsmittels 4 auf. Zusätzlich weist diese Elektrode 33 Durchgangsöffnungen 29 auf, durch die Schrauben oder andere Befestigungsmittel durchgeführt werden können, um die Elektrode 33 am Bauteil 3 oder am Befestigungsgrund im Wesentlichen unverschieblich zu befestigen.

### Bezugszeichenliste

### Befestigungsanordnung und Messverfahren

- 1, 1', 1": Befestigungsanordnung
- 2: Befestigungsgrund
- 3: Bauteil
- 4: Befestigungsmittel
- 5, 5', 5": Sensor
- 6: Gewindestange
- 7: Durchgangsloch
- 8: Bohrloch
- 9: aushärtende Masse
- 10: Mutter
- 11: erste Elektrode
- 12, 12', 12": zweite Elektrode
- 13: Umhüllung
- 14: erste Schutzschicht
- 15: Trennschicht
- 16: zweite Schutzschicht
- 17: Abschirmung
- 18: Isolationsschicht
- 19: Erdungskabel
- 20: Potenzialausgleichsmittel
- 21: Anschlusskabel
- 22: Anschlusselement
- 23: Stromquelle
- 24: erste Klebeschicht
- 25: Trennfläche
- 26: zweite Klebeschicht
- 27: Einführöffnung
- 28: Durchführöffnung
- 29: Durchgangsöffnung
- 30: Unterlegscheibe
- 31, 32, 33: weitere Elektroden
- w: Bewegungsrichtung

## Patentansprüche

1. Befestigungsanordnung (1, 1', 1") im Bauwesen, mit einem an einem Befestigungsgrund (2), welcher Teil eines Bauwerks ist, angeordneten Bauteil (3), mit einem Befestigungsmittel (4), mit dem das Bauteil (3) am Befestigungsgrund (2) befestigt ist, wobei das Befestigungsmittel (4) das Bauteil (3) durchdringt und gegen den Befestigungsgrund (2) presst, und mit einem Sensor (5, 5', 5") zur Messung einer Bewegung des Bauteils (3) vom Befestigungsgrund (2) weg, **dadurch gekennzeichnet,**
**dass** der Sensor (5, 5', 5") eine erste Elektrode (11) eines Kondensators aufweist, die zwischen dem Bauteil (3) und dem Befestigungsgrund (2) angeordnet ist.

2. Befestigungsanordnung nach Anspruch 1, **dadurch gekennzeichnet, dass** die erste Elektrode (11) im Wesentlichen unbeweglich mit dem Befestigungsgrund (2) verbunden ist.

3. Befestigungsanordnung nach Anspruch 1 oder 2, **dadurch gekennzeichnet, dass** eine zweite Elektrode (12, 12', 12"), die mit der ersten Elektrode (11) einen Kondensator bildet, im Wesentlichen unbeweglich mit dem Bauteil (3) verbunden ist und/oder dass das Bauteil (3) die zweite Elektrode (12) bildet.

4. Befestigungsanordnung nach einem der vorstehenden Ansprüche, **dadurch gekennzeichnet, dass** die erste Elektrode (11) von der zweiten Elektrode (12, 12', 12") durch eine feste, elektrisch isolierende Trennschicht (15) getrennt ist.

5. Befestigungsanordnung nach einem der vorstehenden Ansprüche, **dadurch gekennzeichnet, dass** zwischen dem Bauteil (3) und der ersten Elektrode (11) eine Schutzschicht (14) angeordnet ist.

6. Befestigungsanordnung nach einem der vorstehenden Ansprüche, **dadurch gekennzeichnet, dass** weiche elastische Schutzschichten (14, 16) eine Umhüllung (13) einer Elektrode (11, 12, 12', 12"), insbesondere des Sensors (5'), bilden.

7. Befestigungsanordnung nach einem der vorstehenden Ansprüche, **dadurch gekennzeichnet, dass** an der dem Bauteil (3) abgewandten Seite der ersten Elektrode (11) eine elektrische Abschirmung (17) angeordnet ist, die von der ersten Elektrode (11) durch eine elektrische Isolationsschicht (18) getrennt ist.

8. Befestigungsanordnung nach den Ansprüchen 3 und 7, **dadurch gekennzeichnet, dass** die zweite Elektrode (12, 12', 12") und die Abschirmung (17) über ein Potentialausgleichsmittel (20) verbunden sind.

9. Befestigungsanordnung nach einem der vorstehenden Ansprüche, **dadurch gekennzeichnet, dass** der Sensor (5, 5', 5") ein Anschlusselement (22) aufweist, zum elektrischen Anschluss der ersten Elektrode an einer Stromquelle (23).

10. Befestigungsanordnung nach einem der vorstehenden Ansprüche, **dadurch gekennzeichnet, dass** die erste Elektrode U-förmig oder als geschlitzter Ring ausgebildet ist.

11. Befestigungsanordnung nach einem der vorstehenden Ansprüche, **dadurch gekennzeichnet, dass** die Befestigungsanordnung mehrere erste Elektroden umfasst, die in einer Ebene zwischen dem Bauteil und dem Befestigungselement verteilt angeordnet sind.

12. Messverfahren, bei dem eine Befestigungsanordnung (1, 1', 1") nach einem der vorstehenden Ansprüche verwendet wird und mittels des Sensors (5, 5', 5") ein mit dem Abstand des Bauteils (3) von der ersten Elektrode (11) korreliertes Signal erzeugt wird.

13. Messverfahren nach Anspruch 12, **dadurch gekennzeichnet, dass** bei einer Anfangsbelastung des Bauteils (3) ein Referenzsignal erzeugt wird.

14. Messverfahren nach Anspruch 13, **dadurch gekennzeichnet, dass** das mit dem Abstand des Bauteils (3) von der ersten Elektrode (11) korrelierte Signal mit dem Referenzsignal verglichen und daraus ein Verschiebeweg ermittelt wird.

15. Messverfahren nach Anspruch 14, **dadurch gekennzeichnet, dass** der ermittelte Verschiebeweg mit Vergleichswerten verglichen wird.

## Claims

1. Fixing arrangement (1, 1', 1") in the construction sector, having a component (3) arranged on a fixing substrate (2) which is part of a built structure, having a fixing means (4) with which the component (3) is fixed to the fixing substrate (2), the fixing means (4) passing through the component (3) and pressing it against the fixing substrate (2), and having a sensor (5, 5', 5") for measuring a movement of the component (3) away from the fixing substrate (2),
**characterised in that**
the sensor (5, 5', 5") has a first electrode (11) of a capacitor, which electrode is arranged between the component (3) and the fixing substrate (2).

2. Fixing arrangement according to claim 1, **characterised in that** the first electrode (11) is substantially immovably joined to the fixing substrate (2).

3. Fixing arrangement according to claim 1 or 2, **characterised in that** a second electrode (12, 12', 12"), which, together with the first electrode (11), forms a capacitor, is substantially immovably joined to the component (3) and/or the component (3) forms the second electrode (12).

4. Fixing arrangement according to any one of the preceding claims, **characterised in that** the first electrode (11) is separated from the second electrode (12, 12', 12") by a solid, electrically insulating separating layer (15).

5. Fixing arrangement according to any one of the preceding claims, **characterised in that** a protective layer (14) is arranged between the component (3) and the first electrode (11).

6. Fixing arrangement according to any one of the preceding claims, **characterised in that** soft resilient protective layers (14, 16) form a covering (13) of an electrode (11, 12, 12', 12"), especially of the sensor (5').

7. Fixing arrangement according to any one of the preceding claims, **characterised in that** on the side of the first electrode (11) that faces away from the component (3) there is arranged an electrical shield (17) which is separated from the first electrode (11) by an electrical insulation layer (18).

8. Fixing arrangement according to claims 3 and 7, **characterised in that** the second electrode (12, 12', 12") and the shield (17) are connected via an equipotential bonding means (20).

9. Fixing arrangement according to any one of the preceding claims, **characterised in that** the sensor (5, 5', 5") has a connection element (22) for electrical connection of the first electrode to a power source (23).

10. Fixing arrangement according to any one of the preceding claims, **characterised in that** the first electrode is U-shaped or in the form of a slotted ring.

11. Fixing arrangement according to any one of the preceding claims, **characterised in that** the fixing arrangement comprises a plurality of first electrodes which are arranged distributed in a plane between the component and the fixing element.

12. Measurement method, wherein a fixing arrangement (1, 1', 1") according to any one of the preceding claims is used and, by means of the sensor (5, 5', 5"), a signal correlated with the spacing of the component (3) from the first electrode (11) is generated.

13. Measurement method according to claim 12, **characterised in that** a reference signal is generated with the component (3) under an initial load.

14. Measurement method according to claim 13, **characterised in that** the signal correlated with the spacing of the component (3) from the first electrode (11) is compared with the reference signal and a displacement travel is determined therefrom.

15. Measurement method according to claim 14, **characterised in that** the displacement travel determined is compared with comparison values.

## Revendications

1. Dispositif de fixation (1, 1', 1") dans le domaine du bâtiment, comprenant une pièce structurelle (3) implantée sur une base de fixation (2) faisant partie d'un ouvrage de construction ; un moyen de fixation (4) par lequel ladite pièce structurelle (3) est fixée à ladite base de fixation (2), lequel moyen de fixation (4) traverse la pièce structurelle (3) et la presse contre la base de fixation (2) ; et un capteur (5, 5', 5") conçu pour mesurer un mouvement de la pièce structurelle (3) l'éloignant de la base de fixation (2),
**caractérisé par le fait**
**que** le capteur (5, 5', 5") comporte une première électrode (11) d'un condensateur, interposée entre la pièce structurelle (3) et la base de fixation (2).

2. Dispositif de fixation selon la revendication 1, **caractérisé par le fait que** la première électrode (11) est reliée, pour l'essentiel, à la base de fixation (2) sans faculté de mouvement.

3. Dispositif de fixation selon la revendication 1 ou 2, **caractérisé par le fait qu'**une seconde électrode (12, 12', 12") formant un condensateur avec la première électrode (11) est reliée, pour l'essentiel, à la pièce structurelle (3) sans faculté de mouvement ; et/ou **par le fait que** ladite pièce structurelle (3) constitue ladite seconde électrode (12).

4. Dispositif de fixation selon l'une des revendications précédentes, **caractérisé par le fait que** la première électrode (11) est séparée d'avec la seconde électrode (12, 12', 12") par une couche séparatrice solide (15) électriquement isolante.

5. Dispositif de fixation selon l'une des revendications précédentes, **caractérisé par le fait qu'**une couche protectrice (14) est interposée entre la pièce structurelle (3) et la première électrode (11).

6. Dispositif de fixation selon l'une des revendications précédentes, **caractérisé par le fait que** des couches protectrices (14, 16), souples et élastiques, constituent une enveloppe (13) d'une électrode (11, 12, 12', 12"), et du capteur (5') en particulier.

7. Dispositif de fixation selon l'une des revendications précédentes, **caractérisé par le fait qu'**un blindage électrique (17), implanté du côté de la première électrode (11) pointant à l'opposé de la pièce structurelle (3), est séparé d'avec ladite première électrode (11) par une couche (18) d'isolation électrique.

8. Dispositif de fixation selon les revendications 3 et 7, **caractérisé par le fait que** la seconde électrode (12, 12', 12") et le blindage (17) sont raccordés par l'intermédiaire d'un moyen (20) égalisateur de potentiel.

9. Dispositif de fixation selon l'une des revendications précédentes, **caractérisé par le fait que** le capteur (5, 5', 5") est muni d'un moyen de connexion (22) dévolu au raccordement électrique de la première électrode à une source de courant (23).

10. Dispositif de fixation selon l'une des revendications précédentes, **caractérisé par le fait que** la première électrode est réalisée avec configuration en U, ou en tant que bague fendue.

11. Dispositif de fixation selon l'une des revendications précédentes, **caractérisé par le fait que** ledit dispositif de fixation compte plusieurs premières électrodes implantées, avec répartition, dans un plan situé entre la pièce structurelle et l'élément de fixation.

12. Procédé de mesure dans lequel il est fait usage d'un dispositif de fixation (1, 1', 1") conforme à l'une des revendications précédentes et un signal, corrélé avec la distance comprise entre la pièce structurelle (3) et la première électrode (11), est engendré au moyen du capteur (5, 5', 5").

13. Procédé de mesure selon la revendication 12, **caractérisé par le fait qu'**un signal de référence est engendré lors d'une contrainte initiale imposée à la pièce structurelle (3).

14. Procédé de mesure selon la revendication 13, **caractérisé par le fait que** le signal corrélé avec la distance comprise entre la pièce structurelle (3) et la première électrode (11) est comparé au signal de référence, et une course de déplacement est déterminée sur cette base.

15. Procédé de mesure selon la revendication 14, **caractérisé par le fait que** la course de déplacement déterminée est comparée à des valeurs comparatives.
